# EUROPÄISCHE PATENTSCHRIFT

(11) **EP 0 363 691 B1**
(45) Veröffentlichungstag und Bekanntmachung des Hinweises auf die Patenterteilung: **04.05.1994**
(21) Anmeldenummer: 89117335.3
(22) Anmeldetag: 20.09.1989
(51) Int. Cl.: B65H 35/10, B32B 31/20

(54) **Thermo-Siegel-Maschine**
Heat-sealing machine
Machine de thermosoudage

(30) Priorität: 12.10.1988 DE 3834655
(43) Veröffentlichungstag der Anmeldung: 18.04.1990
(73) Patentinhaber: Billhöfer Maschinenfabrik GmbH, D-90459 Nürnberg (DE)
(72) Erfinder: Rau, Heinz, D-8500 Nürnberg (DE); Götz, Wilhelm, D-8500 Nürnberg (DE)
(74) Vertreter: Matschkur, Götz, Lindner Patent- und Rechtsanwälte

(56) Entgegenhaltungen:
- EP-A- 0 094 647
- DE-A- 2 144 991
- DE-A- 3 205 801
- GB-A- 2 135 934
- US-A- 2 252 736
- US-A- 4 131 272

## Beschreibung

Die Erfindung bezieht sich auf eine Foliensiegelmaschine mit Bogenzuführung im Taktsystem, insbes. Siegelmasschine mit einer zweischichtigen Kunststoff-Folie, deren eine thermisch erweichend den Kleber bildet, mit einem wasserbeheizten Kaschierkalander und einer Trennvorrichtung mit einer Bremswalze und einer in Laufrichtung beabstandet voreilend angetriebenen Abreißwalze, jeweils mit Gegendruckgliedern.

Die bisher bekanntgewordenen Kaschiermaschinen bilden sehr große Aggregate, wobei die Trennvorrichtung - schon wegen der dort benötigten Größe - meist ein gesondertes Aggregat ist, welches mit der Bogenkaschiermaschine über eine Bandzuführvorrichtung für die zunächst noch über die Kaschierfolie verbundenen Bogen verbunden ist. Diese großen Maschinen sind für viele Einsatzzwecke nicht geeignet, wobei allerdings der Vereinigung der Kaschiervorrichtung mit der Trennvorrichtung die große Abmessung dieser Trennvorrichtungen gegensteht, da ja der Abstand zwischen der Bremswalze und der Trennwalze größer sein muß als das Folienformat, damit die voreilend angetriebene Trennwalze nicht die Oberfläche der kaschierten Bogen beschädigen kann, indem sie ständig auf ihr reibt. Nur wenn der Abstand der Bremswalze zur Abreißwalze größer ist als das Folienformat ist gewährleistet, daß mit dem Einlaufen des jeweils neuen Bogens unter die Abreißwalze, der über die Folie noch mit dem nachfolgenden Bogen verbunden ist, die Überlappungsstelle zu nächstfolgenden Bogen bereits die Bremswalze passiert hat, die Bremswalze also diesen nächstfolgenden Bogen festhält und die Abreißwalze den unter ihr liegenden Bogen von der nächsten durch Abreißen der sie verbindenden Folienkaschierung trennt.

GB-A-2 135 934 offenbart eine Foliensiegelmaschine, die eine Trennvorrichtung mit Bremswalzen und Abreißwalzen aufweist, wobei die Kaschierten Bogen mit Hilfe einer Schnittvorrichtung von einander getrennt werden.

Der Erfindung liegt daher die Aufgabe zugrunde, eine Foliensigelmaschine der eingangs genannten Art so auszugestalten, daß sie bei einfachem Aufbau sehr viel platzsparender und weniger ausladend ausgelegt werden kann und somit auch unter beengteren Raumbedingungen Aufstellung finden kann.

Zur Lösung dieser Aufgabe ist erfindungsgemäß vorgesehen, daß die Trennvorrichtung mit der Siegelmaschine zu einer kurzen Baueinheit verbunden ist und daß die Bremswalze und die Abreißwalze einander benachbart angeordnet sind, wobei die Abreißwalze im Bogentakt gesteuert mit Preßluftzylindern an- und abgestellt wird, derart, daß sie nur kurzfristig aufsetzt, während eine Bodentrennstelle zwischen Brems- und Abreißwalze liegt.

Durch die erfindungsgemäße Ausbildung der Trennvorrichtung und der daraus resultierenden Möglichkeit, diese Trennvorrichtung auch sinnvoll mit der eigentlichen Siegelvorrichtung zu einer Baueinheit verbinden zu können, können beliebig lange Bogenformate verarbeitet werden, ohne daß die Trennvorrichtung entsprechend lang ausgelegt ist.

Da es lediglich erforderlich ist, daß der Abstand der Walzenpaare etwas größer ist als die Bogenüberlappung, können in der Praxis die Bremswalze und die Abreißwalze unmittelbar aneinandergrenzen, da aufgrund der notwendigen Durchmesser der Walzen dann der Abstand der Auflagekanten immer noch größer ist als diese genannte Bogenüberlappung, die ja üblicherweise nur im Bereich von einigen Zentimetern liegt.

In dem Moment, in welchem die nachlaufende Kante des gerade unter der Abreißwalze liegenden Bogens die Bremswalze passiert hat, wird die Abreißwalze abgesenkt, drückt auf den Bogen und die zugehörige Gegendruckwalze und reißt aufgrund des voreilenden Antriebs mit etwa 60 % höherer Umdrehungsgeschwindigkeit als die Bremswalze die Kaschierfolie zwischen den beiden Bogen ab und separiert gleichzeitig die höhere Umlaufgeschwindigkeit den abgerissenen vorlaufenden Bogen von dem nächstfolgenden Bogen. Ehe bis der nächstfolgende Bogen unter die Abreißwalze läuft, hat diese bereits wieder abgehoben, so daß sie nicht auf der Bogenoberfläche schleift und diese beschädigen kann. Erst wenn wieder die nächste Bogenüberlappungszone durch die Bremswalze hindurchgefahren ist, erfolgt erneut das Absenken der Abreißwalze usw.

Mit ganz besonderem Vorteil ist eine erfindungsgemäße Foliensiegelmaschine mit integrierter Trennvorrichtung in Ausgestaltung der Erfindung so konstruiert, daß die Lagerwelle für die Kaschierfolie, die oberhalb der Durchführungsbahn für die zu kaschierenden Bogen an der Siegelvorrichtung angeordnet ist, auf einer Seite lösbar gelagert, um die andere Lagerstelle nach außen herausschwenkbar ist. Auf diese Weise kann nämlich ohne besondere Schwierigkeiten, ohne Kräne oder Brückenkonstruktion eine einfache Beladung mit einer neuen Kaschierfolienrolle stattfinden, was wegen der unmittelbar hinter der eigentlichen Kaschiervorrichtung angeflanschten Trennvorrichtung ja ansonsten nicht möglich wäre.

Schließlich liegt es auch noch im Rahmen der Erfindung, eine der Trennvorrichtung vorgeschaltete Reckeinrichtung in Form einer gegen eine Walze arretierbar verschwenkbaren Reckplatte vorzusehen, der ggf. auch noch eine Kühlvorrichtung nachgeschaltet sein kann. Durch eine solche Reckeinrichtung kann unmittelbar hinter der Vereinigungsstelle der Kaschierfolie mit den sich schuppenartig überlappenden Bogen ein Recken des gebildeten Bandes folgen, da durch das Schrumpfen der Kaschierfolie eine Wölbung der Bogen eintritt, der sofort durch das anschließende Recken entgegengewirkt wird, so daß die Bogen letztendlich glatt und eben in die Trennvorrichtung einlaufen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine schematische Seitenansicht einer erfindungsgemäßen Foliensiegelmaschine mit integrierter Trennvorrichtung und
- Fig. 2: eine ebenso schematisierte Aufsicht auf die Vorrichtung nach Fig. 1.

Von der Eingabestation 1, in der die bedruckten zu kaschierenden Bogen auf einem Palettenwagen 2 eingefahren werden, erfolgt die Bogenzuführung mit einander überschuppenden Rändern im Taktsystem über die schematisch angedeutete Transportvorrichtung 3 sowie im einzelnen nicht bezeichnete Zuführrollen zum wasserbeheizten Kaschierkalander 4 mit einer Gegenwalze 5. Von einer auf einer Welle 6 gelagerten Kaschierfolienwalze 7 wird eine zweischichtige Kunststoffkaschierfolie 8 abgezogen, welche den Kaschierkalander teilweise umschlingend zwischen diesem und der Gegendruckwalze mit den zwischen beiden durchlaufenden Bogen vereinigt wird. Die den zu beschichtenden Bogen zugewandte Folienseite besteht aus einer Schicht, die durch die Erwärmung am wasserbeheizten Kaschierkalander erweicht und damit den Kleber zur Verbindung der zweiten, die eigentliche Kaschierfolie bildenden Schicht mit den bedruckten Papierbogen bildet. Unmittelbar hinter dem Auslauf der aufgrund der Kaschierung mit der Folie 8 nunmehr zusammenhängenden geschuppten Bogen aus dem Vereinigungsspalt zwischen Kaschierkalander 4 und der Gegenwalze 5 ist eine Reckvorrichtung 9 vorgesehen, die aus einer Walze 10 und einer gegenüber dieser um eine Achse 11 verschwenkbasren Reckplatte 12 besteht. Je nachdem, wie nahe die Kante der Reckplatte 12 der Walze 10 liegt bzw. weiter weg ist, desto größer bzw. kleiner ist der Winkel, um welchen die kaschierte Bogenbahn im Spalt zwischen diesen beiden Bauteilen eine Krümmung nach unten erfährt, um der durch das Schrumpfen der oben angeordneten Kunststoffkaschierfolie bewirkten Wölbung nach oben entgegenzuwirken, so daß hinter der Reckeinrichtung 9 der folienkaschierte Bogenstapel eben ausläuft. Unmittelbar hinter der Reckeinrichtung 9, ggf. nur durch eine zwischengeschaltete zusätzliche Kühleinrichtung getrennt, die in den Figuren nicht dargestellt ist, ist eine Trennvorrichtung 13 vorgesehen, die eine Bremswalze 14, eine Abreißwalze 15 sowie jeder dieser Walzen zugeordnete Gegendruckwalzen 16 und 17 umfaßt. Die Bremswalze und die Abreißwalze sind erfindungsgemäß einander sehr eng benachbart derart, daß ihr Abstand nur etwas größer ist als die Bogenüberlappung. Die Abreißwalze 15 ist über nicht gezeigte Preßluftzylinder an- und abstellbar. Erst wenn gerade die Überlappungszone zweier durch die Kaschierfolie miteinander noch zusammenhängender Bogen den Spalt zwischen der Bremswalze 14 und ihrer Gegendruckswalze 16 passiert hat, setzt die Abreißwalze 15, die mit einer etwa 60 % größeren Umdrehungsgeschwindigkeit als die als die Bremswalze voreilend angetrieben wird, auf den vorderen der Bogen auf und reißt die Folie zwischen dem vorderen Bogen und der durch die Bremswalze zurückgehaltenen hinteren Bogen ab, beschleunigt den Bogen weiter, so daß er schließlich von der Bandtransporteinrichtung 18 mit den strichpunktiert nur angedeuteten Transportbändern 19 weiterbefördert und auf einem Ablagetisch 20 abgelegt wird. Sofort nach dem Abreißen des vorderen Bogens, jedenfalls bevor die Kante des nachfolgenden Bogens unter die Abreißwalze 15 gelangt, wird diese durch entsprechende Fühler taktgesteuert wiederum von den Preßluftzylindern abgehoben und setzt erst wieder auf, wenn die nächste Bogenüberlappungszone wieder zwischen Bremswalze und Abreißwalze liegt.

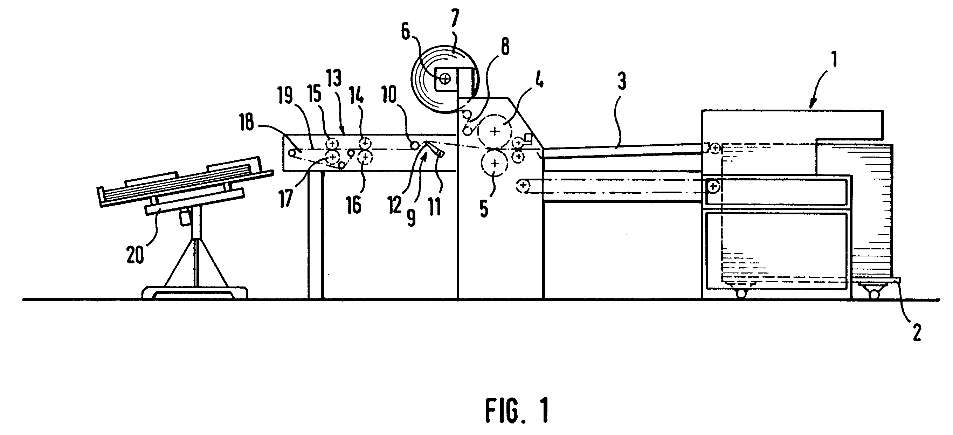

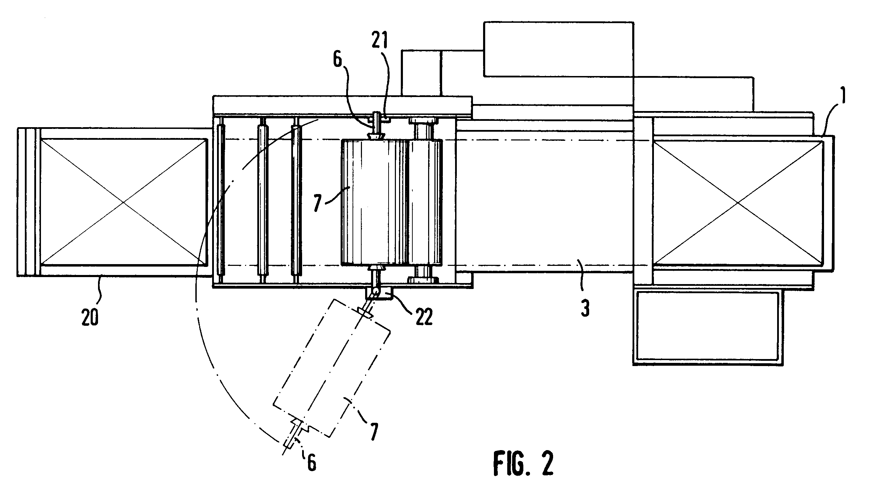

In Fig. 2 erkennt man besonders deutlich die einseitig lösbare Lagerung der Lagerwelle 6 für die Kaschierfolienwalze 7. Auf der in Fig. 1 betrachtet hinteren abgelegenen Seite der Vorrichtung ist diese Lagerwelle lediglich in eine Auflagemulde des Stützlagers 21 eingelegt, so daß die Lagerwelle 6 um das drehbar ausgebildete vordere Drehlager 22 in die in Fig. 2 strichpunktierte Stellung herausschwenkbar ist, um auf diese Weise ein sehr einfaches Abnehmen einer leeren und ein Wiederaufsetzen einer neuen Kaschierfolienwalze 7 durchführen zu können.

## Patentansprüche

1. Foliensiegelmaschine mit Bogenzuführung im Taktsystem, insbes. Thermosiegelmaschine mit einer zweischichtigen Kunststoff-Folie, deren eine thermisch erweichend den Kleber bildet, mit einem wasserbeheizten Kaschierkalander (4) und einer Trennvorrichtung (13) mit einer Bremswalze (14) und einer in Laufrichtung beabstandeten voreilend angetriebenen Abreißwalze (5), jeweils mit Gegendruckgliedern, wobei die Trennvorrichtung (13) mit der Siegelmaschine zu einer kurzen Baueinheit vereinigt ist und dadurch gekennzeichnet daß die Bremswalze (14) und die Abreißwalze (5) einander benachbart angeordnet sind, so daß sie unmittelbar aneinander angrenzen, wobei die Abreißwalze (15) im Bogentakt gesteuert mit Pneumatikzylindern an- und abgestellt wird, derart, daß sie nur kurzfristig aufsetzt, während eine Bogentrennstelle zwischen Bremswalze (14) und Abreißwalze (15) liegt.

2. Foliensiegelmaschine nach Anspruch 1, dadurch gekennzeichnet, daß der Abstand der Bremswalze (14) und der Abreißwalze (15) etwas größer ist als die Bogenüberlappung.

3. Foliensiegelmaschine nach Anspruch 1 oder 2, dadurch gekennzeichnet, daß die Gegendruckglieder Gegendruckwalzen (16, 17) sind.

4. Foliensiegelmaschine nach einem der Ansprüche 1 bis 3, dadurch gekennzeichnet, daß die Lagerwelle (6) für die Folienrolle (7) auf einer Seite lösbar gelagert um die andere Lagerstelle (22) nach außen herausschwenkbar ist.

5. Foliensiegelmaschine insbes. nach einem der Ansprüche 1 bis 4, gekennzeichnet durch eine der Trennvorrichtung vorgeschaltete Reckeinrichtung (9) in Form einer gegen eine Walze (10) arretierbar verschwenkbaren Reckplatte (12).

6. Foliensiegelmaschine nach Anspruch 5, gekennzeichnet durch eine der Reckeinrichtung (9) nachgeschaltete Kühlvorrichtung.

## Claims

1. Foil sealing machine with cyclical sheet feed, in particular heat-sealing machine with a two-ply plastics foil, one of which, softening with heat, forms the adhesive, with a water-heated laminating calendering roller (4) and a separating device (13) with a braking roller (14) and a tear-off roller (5) driven in a leading manner and spaced in the direction of travel, each with counterpressure members, the separating device (13) being combined with the sealing machine to form a short structural unit, characterised in that the braking roller (14) and the tear-off roller (5) are adjacent to one another so that they border directly on one another, the tear-off roller (15) being switched on and off in synchronisation with the sheet feed by means of pneumatic cylinders, in such a manner that it switches on only for a short period, whilst a sheet separating position lies between the braking roller (14) and the tear-off roller (15).

2. Foil sealing machine according to claim 1, characterised in that the distance between the braking roller (14) and the tear-off roller (15) is slightly larger than the sheet overlap.

3. Foil sealing machine according to claim 1 or 2, characterised in that the counterpressure members are counterpressure rollers (16, 17).

4. Foil sealing machine according to one of claims 1 to 3, characterised in that the bearing shaft (6) for the foil roller (7) detachably mounted on one side can be pivoted outwards about the other bearing point (22).

5. Foil sealing machine in particular according to one of claims 1 to 4, characterised by a stretching device (9) connected upstream of the separating device, in the form of a stretching plate (12) pivotable into a locked position against a roller (10).

6. Foil sealing machine according to claim 5, characterised by a cooling device connected in series with the stretching device (9).

## Revendications

1. Machine de soudage de film comprenant une alimentation en feuille cyclique, notamment une machine de thermo-soudage comprenant un film en matière plastique à deux couches, dont l'une en se ramollissant par effet thermique forme la colle, la machine comportant une calandre de contrecollage (4) chauffée à l'eau et un dispositif de séparation (13) comprenant un cylindre de freinage (14) et, à distance de celui-ci dans la direction d'avancement, un cylindre de rupture (15) entraîné en avance, chacun de ces cylindres comprenant des organes de contrepression, le dispositif de séparation (13) étant regroupé à la machine de soudage en un module de faible longueur, caractérisée en ce que le cylindre de freinage (14) et le cylindre de rupture (15) sont disposés en étant voisins l'un de l'autre, de façon à être directement côte à côte, le cylindre de rupture (15) étant soulevé et abaissé à l'aide de vérins pneumatiques, en étant commandé selon le cycle des feuilles, de manière telle, qu'il ne vient reposer que très brièvement pendant qu'une zone de séparation de feuille se situe entre le cylindre de freinage (14) et le cylindre de rupture (15).

2. Machine de soudage de film selon la revendication 1, caractérisée en ce que la distance entre le cylindre de freinage (14) et le cylindre de rupture (15), est légèrement supérieure au chevauchement des feuilles.

3. Machine de soudage de film selon la revendication 1 ou 2, caractérisée en ce que les organes de contrepression sont des cylindres de contrepression (16, 17).

4. Machine de soudage de film selon l'une des revendications 1 à 3, caractérisée en ce que l'arbre de palier (6) destiné au rouleau de film (7) est monté de manière amovible d'un côté afin de pouvoir pivoter vers l'extérieur autour de l'autre emplacement de palier (22).

5. Machine de soudage de film, notamment selon l'une des revendications 1 à 4, caractérisée par un dispositif d'étirage (9) en amont du dispositif de séparation, et se présentant sous la forme d'une plaque d'étirage (12) pouvant pivoter à l'encontre d'un cylindre (10) en étant susceptible d'être bloquée.

6. Machine de soudage de film selon la revendication 5, caractérisée par un dispositif de refroidissement situé en aval du dispositif d'étirage (9).
